**Europäisches Patentamt**

**European Patent Office**

**Office européen des brevets**

(19)

(11) Veröffentlichungsnummer: **0 322 730**
**A2**

(12) **EUROPÄISCHE PATENTANMELDUNG**

(21) Anmeldenummer: **88121372.2**

(22) Anmeldetag: **21.12.88**

(51) Int. Cl.⁴: **A61C 13/00**

(30) Priorität: **23.12.87 DE 3743674**

(43) Veröffentlichungstag der Anmeldung:
**05.07.89 Patentblatt 89/27**

(84) Benannte Vertragsstaaten:
**AT BE CH DE ES FR GB GR IT LI LU NL SE**

(71) Anmelder: **Barrut, Marc**
**13 Rue Antoinette**
**F-69003 Lyon(FR)**

(72) Erfinder: **Barrut, Luc, Dr. med. dent.**
**Wilhelmshofallee 96 a**
**D-4150 Krefeld(DE)**

(74) Vertreter: **Kiefer, Winfried, Dipl.-Phys.**
**Kasinostrasse 13**
**D-4100 Duisburg 1(DE)**

(54) **Gebiss, sowie provisorisches Gebiss und Verfahren zu ihrer Herstellung.**

(57) Zum Herstellen eines Gebisses für den Oberkiefer und/oder für den Unterkiefer werden zunächst mit einem ersten Abdruck des Oberkiefers und einem ersten Abdruck des Unterkiefers jeweils ein Modell angefertigt und in einem Artikulator zueinander justiert. An den Modellen wird (werden) ein individueller Löffel für den Oberkiefer und/oder ein individueller Löffel für den Unterkiefer hergestellt und in der Mundhöhle des Patienten korrigiert. Aus dem (den) korrigierten individuellen Löffel(n) und einer mit ihm (ihnen) verbindbaren Zahnreihe aus künstlichen Zähnenwird (werden) ein provisorisches Gebiß (provisorische Gebisse) hergestellt, die Zahnreihe(n) zu dem (den) korrigierten individuellen Löffel(n) als Einheit verstellbar ausgebildet das Justieren der Zahnreihe(n) zu dem (den) korrigierten individuellen Löffel(n) während der Tragens des (der) provisorischen Gebisses (Gebisse) vorgenommen und anhand des (der) justierten provisorischen Gebisses (Gebisse) werden die Gießform(en) für das Gebiß (die Gebisse) hergestellt, das (die) dann gegossen wird (werden).

FIGUR 1

## Gebiß sowie provisorisches Gebiß und Verfahren zu ihrer Herstellung

Die Erfindung betrifft ein Verfahren zum Herstellen eines Gebisses für den Oberkiefer und/oder eines Gebisses für den Unterkiefer indem mit einem ersten Abdruck des Oberkiefers und mit einem ersten Abdruck des Unterkiefers jeweils ein Modell angefertigt wird, die Modelle in einem Artikulator zueinander justiert werden, an den Modellen ein individueller Löffel für den Oberkiefer und/oder ein individueller Löffel für den Unterkiefer hergestellt und in der Mundhöhle des Patienten korrigiert wird (werden), sowie ein Verfahren zum Herstellen eines provisorischen Gebisses für den Oberkiefer und/oder eines provisorischen Gebisses für den Unterkiefer und das provisorische Gebiß.

Im Sinne der Erfindung ist unter einem Gebiß für den Oberkiefer bzw. den Unterkiefer ein herausnehmbare Prothese für den völlig zahnlosen Oberkiefer bzw. den völlig zahnlosen Unterkiefer zu verstehen.

Es ist bekannt, zum Herstellen eines Gebisses für den Oberkiefer und/oder für den Unterkiefer zunächst einen Abdruck des Oberkiefers und einen Abdruck des Unterkiefers herzustellen, anhand dieser Abdrücke jeweils ein Gipsmodell herzustellen und die Modelle in einen Artikulator einzuspannen. Fehlen sämtliche natürliche Zähne des Oberkiefers, dann wird ein individueller Löffel des Oberkiefers, fehlen sämtliche Zähne des Unterkiefers, dann wird eine individueller Löffel des Unterkiefers am Modell angefertigt, bzw. werden beide individuellen Löffel angefertigt, falls sämtliche Zähne fehlen.

Der (die) individuelle(n) Löffel wird (werden) dann im Mund des Patienten mit einer hochwertigen Abdruckmasse exakt dem Oberkiefer bzw. dem Unterkiefer angepasst.

Auf dem (den) korrigierten individuellen Löffel(n) wird anschließend der Wachswall aufgebracht, der dem Kirferkamm entspricht und der mit den künstlichen Zähnen versehen wird.

Im Mund des patienten wird dann der Wachswall mit den künstlichen Zähnen an die individduellen Gegebenheiten im Mund des Patienten angepasst, wobei eine Justierung an die noch zum Teil nur noch lückenhaft vorhandene Bißebene des Zähne des Unterkiefers bzw. im umgekehrten Falle die Bißebene der Zähne des Oberkiefers vorgenommen wird.

Es kann auch eine andere Bezugsebene, beispielsweise die Frankfurter Ebene gewählt werden.

Anschließend wird anhand des korrigierten Löffels mit dem justierten Wachswall und den künstlichen Zähnen die Gießform für das Gießen des Gibisses für den Oberkiefer bzw. den Unterkiefer hergestellt und das Gebiß unter Umgießen der künstlichen Zähne aus einer hochwertigen Kunststoffmasse gegossen.

Erheblich komplizierter ist die gleichzeitige herstellung eines Gebisses für den Oberkiefer und den Unterkiefer. Als Bezugsebene wird dann von vornherein die Frankfurter Ebene genommen, in deren Ebene die ideale Bißebene verläuft. Zu diesem Zwecke wird am Kopf des patienten ein Gesichtsbogen mit einer Bißplatte justiert, die nach dem Justieren in der Frankfurter Ebene verläuft. Im Mund des Patienten werden die am Modell hergestellten individuellen Löffel für das Gebiss des Oberkiefers und der individuelle Löffel für den Unterkiefer ebenfalls mit einer hochwertigen Adbruckmasse korrigiert, die korrigierten individuellen Löffel werden dann ebenfalls jeweils mit einem Wachswall sowie mit künstlichen Zähnen versehen, entsprechend dem Verlauf der Frankfurter Ebene in etwa justiert, in den Mund des patienten eingesetzt und dann endgültig justiert, wobei dann abschließend entsprechen dem Prinzip des Punktschweißens die beiden Wachswälle durch Erhitzen des Wachses punktuell miteinander verbunden werden, die gebildete Einheit aus dem Mund des Patienten entnommen wird und dann nach dem Trennen der beiden Wachswälle voneinander die gießformen für die Gebisse hergestellt und die Gebisse unter Umgießen der in die Gießformen eingesetzten künstlichen Zähne gegossen werden.

Bereits das Herstellen eines Gebisses nur für den Oberkiefer oder nur für den Unterkiefer erfordert ein feinfühliges Arbeiten vom behandelnden Zahnarztes und ein sorgfältiges Arbeiten des eingeschalteten Zahnlabors und ist nicht problemlos.

Mit den bisher bekannten Methoden lässt es sich nämlich nicht sicher vermeiden, daß nach Fertigstellen des Gebisses und beim anschließend üblichen täglichen Tragen und Benutzen, der Betreffende ein unangenehmes Gefühl und zum Teil erhebliche Schmerzen beim Kauen fester Nahrung ( Bauernbrot, Rohkost usw. ) empfindet.

Oft liegt die Ursache darin, daß aufgrund eines längjährigen Zahnverfalls und Deformation der Mundhöhle wegen langjährig unterlassener Sanierung Anomalien der Kiefer und der verbliebenen Zähne vorliegen, die mit den bisherigen Methoden nicht sicher erfasst werden können. Als Notlösung wurde bisher das fertige Gebiß überarbeitet bzw. wurde in manchen Fällen ein neues Gebiß erforderlich, wobei sehr oft nur eine geringfügige Besserung erzielt werden konnte.

Diese Komplikationen treten besonders dann auf, wenn einem zahnlosen Patienten ein Gebiss für den Oberkiefer und ein Gebiss für den Unterkiefer angefertigt werden müssen.

Diese Schwierigkeiten beruhen im wesentlichen darauf, daß beim Justieren oder Anpassen die individuellen Löffel nur kurzzeitig im Mund des Patienten eingesetzt werden, der Patient den Mund mehrmals öffnet und schließt, wobei vorsichtig vom bzw. auf den Wachswällen Wachs solange ab- bzw. aufgetragen wird, bis aufgrund des momentanen Eindrucks bzw. Gefühls des Patienten die optimale Anpassung bzw. Justierung angeblich erreicht ist.

Es ist ohne weiteres ersichtlich, daß der Patient bei diesen Justierungs- und Anpasungsarbeiten von seinen augenblicklichen Eindrücken oft getäuscht wird und einen optimalen Sitz zu spüren glaubt, was sich dann als Täuschung beim Tragen des fertigen Gebisses herausstellt.

Weiterhin ist es in allen diesen Fällen nicht möglich, vor der Anfertigung des Gebisses bzw. der Gebisse zu prüfen, ob der zukünftige Gebissträger problemlos fest Nahrung kauen kann. Es ist auch nicht möglich, von vornherein Korrekturen so vorzunehmen, daß der Gebissträger unbeschwert sprechen kann und eine optimale Aussprache hat.

Die bisherigen Fertigungsmethoden der Gebisse haben jedoch noch einen weiteren wesentlichen Nachteil: Falls ein Gebiß für den Oberkiefer oder für den Unterkiefer bzw. für beide hergestellt werden soll, ist es oft erforderlich, dem Patienten noch restliche Zähne im Oberkiefer bzw. ims Unterkiefer bzw. in beiden Kiefern zu ziehen. Bis zum Tragen des fertigen Gebisses bzw. der fertigen Gebisse vergehen jedoch oft eine Zeit von einigen Wochen, wobei diese Zeit im wesentlichen davon abhängt, wie schnell die Wunden verheilen. In dieser Zeit trägt der Patient am bzw. an den zahnlosen Kiefern eine Klammer mit Verblendungen, die das Fehlen der Vorderzähne verbergen soll. In dieser Zeit kann jedoch der Patient weder unbeschwert Sprechen noch überhaupt fest Nahrung zu sich nehmen.

Der Erfindung liegt die Aufgabe zugrunde, ein Verfahren zum Herstellen eines Gebisses für den Oberkiefer und/oder eines Gebisses für den Unterkiefer zu schaffen, indem mit einem ersten Abdruck des oberkiefers und mit einem ersten Abdruck des Unterkiefers jeweils ein Modell angefertigt wird, die Modelle in einem Artikulator zueinander justiert werden, an den Modellen ein individueller Löffel für den Oberkiefer und/oder ein individueller Löffel für den Unterkiefer hergestellt und in der Mundhöhle des Patienten korrigiert wird (werden).

Der Erfindung liegt die weitere Aufgabe zugrunde, ein Verfahren zum Herstellen eines provisorischen Gebisses für den Oberkiefer und/oder eines Gebisses für den Unterkiefer zu schaffen, indem mit einem ersten Abdruck des Oberkiefers und mit einem ersten Abdruck des Unterkiefers jeweils ein Modell angefertigt wird, die Modelle in einem Artikulator zueinander justiert werden, an den Modellen ein individueller Löffel für den Oberkiefer und/oder ein individueller Löffel für den Unterkiefer hergestellt und in der Mundhöhle des Patienten korrigiert wird (werden).

Der Erfindung liegt noch die weitere Aufgabe zugrunde, ein provisorisches Gebiß für den Oberkiefer und/oder ein provisorisches Gebiß für den Unterkiefer zu schaffen.

Die erste Aufgabe wird nach einem erstn Lösungsprinzip erfindungsgemäß dadurch gelöst, daß aus dem (den) korrigierten individuellen Löffel(n) und (jeweils) einer mit ihm (ihnen) verbindbaren Zahnreihe aus künstlichen Zähnen ein provisorisches Gebiß (provisorische Gebisse) hergestellt wird (werden), die Zahnreihe(n) zu dem (den) korrigierten individuellen Löffel(n) als Einheit verstellbar ausgebildet wird (werden), das Justieren der Zahnreihe(n) zu dem (den) korrigierten individuellen Löffel(n) während des Tragens des (der) provisorischen Gebisses (Gebisse) erfolgt, anhand des (der) justierten provisorischen Gebisses (Gebisse) die Gießform(en) für das Gebiß (die Gebisse) hergestellt und das Gebiß (die Gebisse) gegossen wird (werden).

In völliger Abkehr vom bisherigen Stand der Technik wird davon abgesehen, korrigierte individuelle Löffel mit einem Wachswall und künstlichen Zähnen zu versehen und dann entsprechende Korrekturen im Mund des Patienten in so kurzer Zeit vorzunehmen, so daß er kein sicheres Gefühl für den ordnungsgemäßen Sitz bzw. Biß entwickeln kann. Vielmehr bilden die korrigierten individu ellen Löffel mit den Zahnreihen aus künstlichen Zähnen provisorische Gebisse, die im Mund des Patienten einstellbar sind, wobei die nattürlichen Zähne des Unterkiefers für den Fall, daß ein Gebiß für den Oberkiefer hergestellt werden soll, und im dem Falle, in dem ein Gebiß für den Unterkiefer hergestellt werden soll, die natürlichen Zähne des Oberkiefers mit ihrer Bißfläche die Kauebene definieren, zu der die Zahnreihe justiert wird.

In völliger Abkehr von dem bisherigen Anpassen bzw. Justieren wird so vorgegangen, daß nach Einsetzen eines provisorischen Gebisses die Zahnreihe so jusitiert wird, daß der Patient ein angenehmes Tragen verspürt. Nach einigen Tagen bzw. schon vorher, wird, falls erforderlich, die Zahnreihe nochmals und gegebenenfalls mehrmals justiert bis der Patient den Eindruck hat, daß er wieder mit seinen natürlichen Zähnen essen und sprechen würde.

Der besondere Vorteil besteht darin, daß ein provisorisches Gebiß nach dem Justieren hinsichtlich Anpassung und Sitz mit dem mit dem endgültigen Gebiß übereinstimmt, d.h., die Gebrauchseigenschaften beider identisch sind und der Patient sobald das provisorissche Gebiß korrekt sitzt, d.h. einjustiert ist, keinen Unterschied mehr zu dem endgültigen Gebiß feststellen kann.

Ein weiterer wesentlicher Vorteil besteht darin, daß der Patient bis zur Fertigstellung des (der) endgültigen Gebisses (Gebisse) sich in jeder Hinsicht frei und natürlich mit dem (den) provisorischen Gebiß (Gebissen) in seiner Umgebung unbeschwert und sicher bewegen kann.

Sobald ein provisorisches Gebiß korrekt sitzt, wird für die Herstellung der Gießform des endgültigen Gebisses ein Abdruck genommen, die Gießform hergestellt, in dieser die künstlichen Zähne, die anhand der Zahnreihe bestimmt wurden, eingesetzt und das endgültige Gebiß unter Umgießen der künstlichen Zähne gegossen. Nach dem Abnehmen des Abdrucks kann der Patient das provisorische Gebiß bis zum Erhalt des endgültigen Gebisses weiter tragen.

Ein weiterer wesentlicher Vorteil besteht auch darin, daß mit provisorischen Gebissen für den Oberkiefer und den Unterkiefer eine Korrektur von Anomalien in der Weise durchgeführt werden kann, daß zusätzlich die beiden Zahnreihen zu einer Bezugsebene beispielsweise zur Frankfurter Ebene einjustiert werden können.

Die zweite Aufgabe wird somit nach einem ersten Lösungsprinzip dadurch gelöst,daß aus dem (den) korrigierten individuellen Löffel(n) und (jeweils) einer mit ihm (ihnen) verbindbaren Zahnreihe aus künstlichen Zähnen ein provisorisches Gebiß (provisorische Gebisse) hergestellt und die Zahnreihe(n) zu dem (den) korrigierten individuellen Löffel(n) als Einheit verstellbar ausgebildet wird (werden).

Die erste Aufgabe wird gemäß einem zweiten Lösungsprinzip dadurch gelöst, daß ein Gesichtsbogen mit einer dem Oberkiefer und/oder dem Unterkiefer zugeordneten Zahnreihe aus künstlichen Zähnen am Kopf des Patienten angeordnet wird, die Zahnreihe(n) zu einer Bezugsebene justiert wird (werden), die justierte Zahnreihe(n) unter Einhaltung der Justierung in den Artikulator umgespannt wird (werden), am Modell ein individueller Löffel für den Oberkiefer und/oder ein individueller Löffel für den Unterkiefer angefertigt und in der Mundhöhle des Patienten korrigiert wird (werden), mit dem (den) korrigierten individuellen Löffel(n) die Zahnreihe(n) verstellbar verbunden wird (werden) und ein provisorisches Gebiß (provisorische Gebisse) bilden, das Justieren der Zahnreihe(n) während des Tragens des (der) provisorischen Gebisses (Gebisse) erfolgt, anhand des (der) justierten provisorischen Gebisses (Gebisse) die Gießform(en) für das Gebiß (die Gebisse) hergestellt und das Gebiß gegossen wird (werden).

Durch diese Maßnahmen wird die Präzision beim Herstellen der erfindungsgemäßen provisorischen Gebisse noch weiter verbessert, insbsondere kann Anomalien bzw. Deformationen des Oberkiefers und/oder der Unterkiefers von vornherein noch besser Rechnung getragen werden als beim ersten Lösungsprinzip, da die Zahnreihen im Mund des Patienten justiert werden und dann an den Modellen die individuellen Löffel für diese justierten Zahnreihen optimiert und im Mund des Patienten korrigiert werden. Die Justierarbeiten werden hierdurch erheblich vereinfacht.

In einer weiteren Ausgestaltung des zweiten Lösungsprinzips wird (werden) zum Herstellen des (der) ersten Abdruckes (Abdrücke) der (die) Abdrucklöffel am Gesichtsbogen befestigt und zur Bezugsebene ausgerichtet.

Durch diese Maßnahmen wird das Ausrichten bzw. Justieren der Gebisse zu einer Bezugsebene weiter vereinfacht.

Die zweite Aufgabe wird nach einem zweiten Lösungsprinzip dadurch gelöst,daß ein Gesichtsbogen mit einer dem Oberkiefer und/oder dem Unterkiefer zugeordneten Zahnreihe aus miteinander verbundenen künstlichen Zähnen am Kopf des Patienten angeordnet wird, die Zahnreihe(n) zu einer Bezugsebene justiert wird (werden), die justierte Zahnreihe(n) unter Einhaltung der Justierung in den Artikulator umgespannt wird (werden), am Modell ein individueller Löffel für den Oberkiefer und/oder ein indivueller Löffel für den Unterkiefer angefertigt und in der Mundhöhle des Patienten korrigiert wird (werden), aus dem (den) korrigierten individuellen Löffel(n) und jeweils einer mit ihm (ihnen) verbindbaren Zahnreihe aus miteinander verbundenen künstlichen Zähnen ein provisorisches Gebiß hergestellt und die Zahnreihe zu dem korrigierten individuellen Löffel als Einheit verstellbar ausgebildet wird.

In einer weiteren Ausgestaltung der Erfindung wird (werden) der (die) Abdrucklöffel am Gesichtsbogen befestigt und zu einer Bezugsebene ausgerichtet.

Das erfindungsgemäßen Verfahren des zweiten Lösungsprinzips zum Herstellen eines Gebisses für den Oberkiefer und/oder eines Gebisses oder für den Unterkiefer wird auch in den Fällen angewendet, in denen die Gebisse mit Implantaten verriegelt werden.

Das erfindungsgemäße Verfahren zum Herstellen eines mit Implantaten verriegelbaren Gebisses für den Oberkiefer und/oder eines Gebisses oder für den Unterkiefer, indem mit einem ersten Abdruck des Oberkiefers und mit einem ersten Abdruck des Unterkiefers jeweils ein Modell angefertigt und die Modelle in einem Artikulator zueinander justiert werden, ist dadurch gekennzeichnet, daß ein Gesichtsbogen mit einer dem Oberkiefer und/oder dem Unterkiefer zugeordneten Zahnreihe aus künstlichen Zähnen am Kopf des Patienten angeordnet wird, die Zahnreihe(n) zu einer Bezugsebene justiert wird (werden), die justierte Zahnreihe(n) unter Einhaltung der Justierung in den Artikulator umgespannt wird (werden) und am Kieferkamm des Modelles zum Anpassen überarbeitet, in den Mund des patienten eingesetzt und verriegelt wird (werden).

In einer weitern Ausgestaltung der Erfindung wird (werden) ebenfalls der (die) Abdrucklöffel am Gesichtsbogen befestigt und zur Bezugsebene ausgerichtet.

Die dritte Aufgabe wird erfindungsgemäß gelöst durch einen korrigieten individuellen Löffel für den Oberkiefer und/oder für den Unterkiefer und eine mit ihm (ihnen) verbindbare Zahnreihe aus künstlichen Zähnen.

Erfindungsgemäß ist (sind) die Zahnreihe(n) aus den künstlichen Zähnen als Einheit(en) zu dem (den) korrigierten individuellen Löffel(n) verstellbar.

Weiterhin sind erfindungsgemäß zwischen dem Kieferkamm des (der) korrigierten individuellen Löffels (Löffel) und der Zahnreihe Justierelemente angeordnet, wobei die Justierelemente mit dem individuellen Löffel und der Zahnreihe kraftschlüssig und/oder formschlüssig in Eingriff stehen.

Die jeweilige Zahnreihe aus den künstlichen Zähnen bildet deim Justieren bzw. Anpassen eine Funktionseinheit, d.h., sie wird als Baueinheit zu dem zugeordneten korrigierten individuellen Löffel verstellt.

Gemäß einem ersten Ausführungsbeispiel besteht die Zahnreihe aus einem vorgefertigten Streifen aus Kunststoffmaterial mit eingeprägten Zähnen.

Für die Praxis ist es hierbei ausreichend, mehrere Gruppen von vorgefertigten Streifern unterschiedlicher Länge zur Verfügung zu haben, die für die einzelnen Patienten auf die erforderliche Höhe zurückgeschliffen bzw. geschnitten werden.

In einer noch weiteren Ausgestaltung der Erfindung besteht ein Streifen einer Zahnreihe aus drei aneinander angelenkten Abschnitten, so daß eine optimale Anpassung an die Außenkontur der provisorischen Gebisse möglich ist.

Gemäß einem weiteren Ausführungsbeispiel sind die künstlichen Zähnen auf (in) eine(r) Profilschiene aufgeschoben, wobei die Profilschiene mit den Zentrierelementen in Eingriff steht.

In einer weiteren Ausgestaltung der Erfindung weist (weisen) der Kieferkamm des (der) individuellen Löffels (Löffel) ein verschiebbares und arretierbares Profil für die Justierselemente auf. Durch diese Maßnahme wird erreicht, daß bei der Anpassung des provisorischen Gebisses eine Zahnreihe insgesamt mit den Zentrierelementen in Richtung zu oder von den Lippen weg justiert werden kann.

In weiterer Ausgestaltung der Erfindung steht (stehen) das (die) Profil(e) und der (die) individuelle(n) Löffel nach dem Prinzip der Schwalbenschwanzverbindung miteinander in Eingriff, so daß eine einfache Schiebeverbindung geschaffen ist, die vorteilhaft einen hohen Reibschluß aufweist, so daß Klemmschrauben usw. zum Arretieren nicht erforderlich sind.

Zum gegenseitigen Arretieren bzw. Verriegeln der individuellen Löffel und der Zahnreihen weisen erfindungsgemäß gemäß einem ersten Ausführungsbeispiel die individuellen Löffel und die Zahnreihen bzw. die Profile der Zahnreihen miteinander fluchtende Bohrungen mit gegenläufigem Innengewinde auf, wobei die Justierelement Gewindebolzen sind, die Gewindebolzen jeweils zwei Spindelabschnitte mit gegenläufigem Gewinde aufweisen und ein Schaft von prismatischem Querschnitt die beiden Spindelabschnitte miteinander verbindet.

Zum gegenseitigen Arretieren bzw. Verriegeln der individuellen Löffel und der Zahnreihen weisen erfindungsgemäß gemäß einem zweiten Ausführungsbeispiel weisen die Justierelemente jeweils einen Schaft von prismatischem Querschnitt auf, wobei an den Schaft sich beidseitig jeweils ein nach dem Prinzip der Madenschraube ausgebildeter Spindelabschnitt anschließt, die beiden Spindelabschnitte gegenläufige Gewinde aufweisen, und die Justierelemente mit den Spindelabschnitten in den (die) individuellen Löffel und die Zahnreihe(n) bzw. das (die) Profil(e) einschraubbar sind. Durch diese Maßnahmen wird erreicht, daß die individuellen Löffel und die Zahnreihen vor ihrem Verbinden mit den Justierelementen beliebig zueinander verschoben werden können.

Gemäß einem noch weiteren Ausführungsbeispiel weisen erfindungsgemäß die Justierelemente jeweils zwei Gewindespindeln und eine Hülse mit einem Innengewinde auf, wobei die einen Endabschnitte der Gewindespindeln mit der Hülse in Eingriff stehen und die anderen Endabschnitte der Spindeln drehbar in Widerlagern angeordnet sind und mit ihnen formschlüssig in Eingriff stehen. Durch eine ausreichend große Selbsthemmung der Gewindespindeln ist sichergestellt, daß ein vorgenommene Justierung erhalten bleibt.

In einer weiteren Ausgestaltung der Erfindung sind die die Widerlager in das Material der Zahnreihe(n) und/oder des (der) individuellen Löffels (Löffel) eingegossen. Durch diese Maßnahme wird erreicht, daß beim Herstellen eines provisorischen Gebisses die Justierelemente optimal angeordnet werden können.

In einer noch weiteren Ausgestaltung der Erfindung sind die anderen Endabschnitte der Gewindespindeln - die Endabschnitte, die nicht mit der Hülse in Eingriff stehen - als Kugelköpfe und die Widerlager als Pfannen ausgebildet, in denen die Kugelköpfe dreh- und schwenkbar mit hoher Reibung gelagert sind.

Durch diese Maßnahmen wird erreicht, daß Gewindespindeln eine Höhenverstellung und weiterhin auch eine Verschiebung der Zahnreihen zu den individuellen Löffeln in einfacher Weise durchführen lassen.

In einer weiteren Ausgestaltung der Erfindung weisen die in den Gesichtbogen einzuspannenden und in den Artikulator umzuspannenden Zahnreihen jeweils einen Spannbolzen auf.

Weitere vorteilhafte Weiterbildungen und Ausgestaltungen der Erfindung, sowie weitere Ausführungsbeispiele sind Gegenstand der übrigen Patentansprüche und werden im Zusammenhang mit der Beschreibung der Figuren erläutert.

Die Erfindung ist in der Zeichnung anhand von Ausführungbeispielen erläutert.

Es zeigen:

Fig. 1 in perspektivischer Darstellung ein provisorisches Gebiß für den Unterkiefer,

Fig. 2 in perspektivischer Darstellung eine Zahnreihe und einen korrigierten individuellen Löffel für den Oberkiefer jeweils mit einem Spannbolzen,

Fig. 3 in perspektivischer Darstellung ein provisorisches Gebiß für den Oberkiefer,

Fig. 4 in perspektivischer Darstellung ein Ausführungsbeispiel für eine Zahnreihe mit einer Profilschiene,

Fig. 5a in perspektivischer Darstellung weitere Ausführungsbei-
5b spiele für Zahnreihen mit einer Profilschiene,

Fig. 6a in perspektivischer Darstellung weitere Ausführungsbei-
6b spiele für Zahnreihen mit einer Profilschiene,

Fig. 7 in perspektivischer Darstellung ein weiteres Ausführungsbeispiel für ein provisorisches Gebiß für den Unterkiefer,

Fig. 8 ein weiteres Ausführungsbeispiel für Profilschienen,

Fig. 9 ein Ausführungsbeispiel für Materialstreifen mit eingeprägten Zähnen,

Fig. 10 Ausführungsbeispiele der Justierelemente,
-14c

In den Figuren sind gleiche Teile mit gleichen Bezugszeichen bezeichnet.

Sämtliche Ausführungen gelten sowohl für das Herstellen eines Gebisses und provisorischen Gebisses für den Oberkiefer als auch für den Unterkiefer.

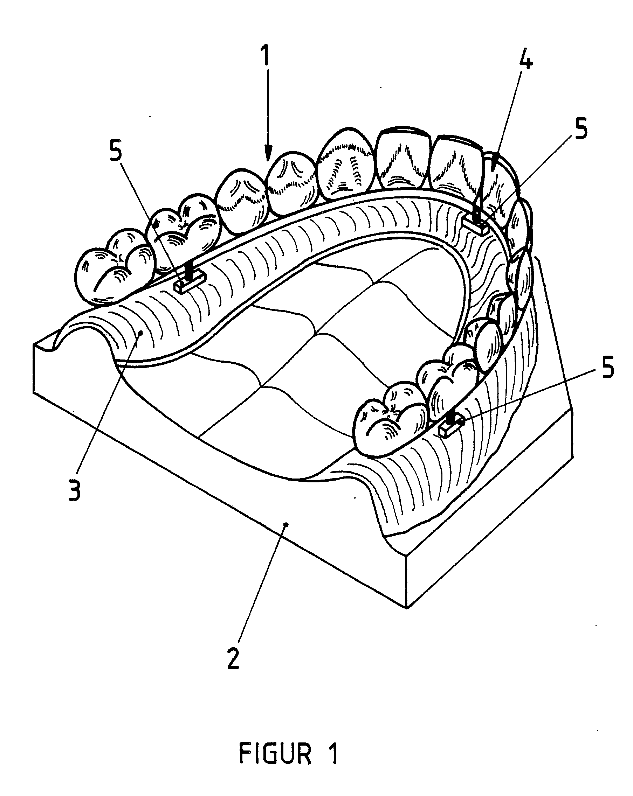

Die Figur 1 zeigt in perspektivischer Darstellung ein mit 1 bezeichnetes provisorisches Gebiß für den Unterkiefer, das auf dem mit 2 bezeichneten Modell des Unterkiefers sitzt. Das Modell des Unterkiefers ist in einem Artikulator angeordnet, der nicht dargestellt ist. Weiterhin ist das im Artikulator angeordnete Modell des Oberkiefers ebenfalls nicht dargestellt.

Zum Herstellen eines Gebisses für den Unterkiefer wird mit einem ersten Abdruck des Unterkiefers das Modell 2 und weiterhin ebenfalls mit einem ersten Abdruck das nicht dargestellte Modell des Oberkiefers angefertigt, die in dem Artikualtor eingespannt und zueinander justiert werden.

Für einen zahnlosen Unterkiefer wird ein individueller Löffel angefertigt, im Mund des Patienten korrigiert und im Artikulator mit einer Zahnreihe aus künstlichen Zähnen verstellbar verbunden, die zusammen eine justierbare Einheit sind und das provisorische Gebiß bilden. Der korrigierte individuelle Löffel ist in Figure 1 mit 3 und die zu ihm verstellbare Zahnreihe aus künstlichen Zähnen mit 4 bezeichnet. Zum Verstellen dienen die Justierelement 5, die im folgenden noch erläutert werden und die in Figur 1 schematisch dargestellt sind.

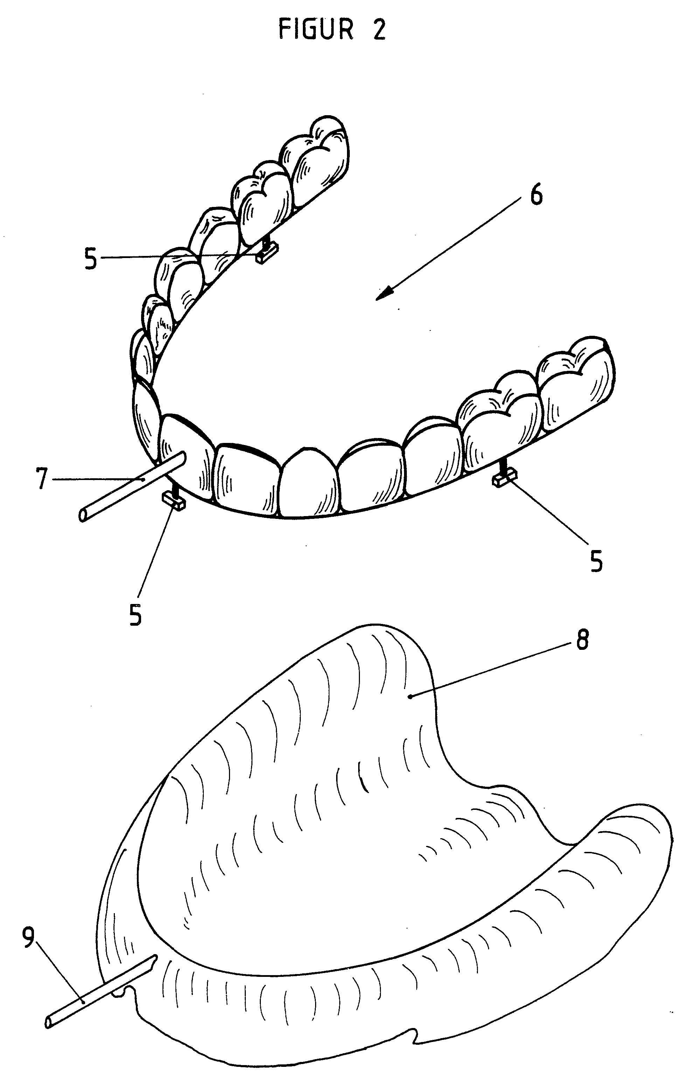

Die Figur 2 zeigt in perspektivischer Darstellung eine Zahnreihe 6 aus künstlichen Zähnen, die einen Spannbolzen 7 aufweist und einen individuellen Löffel 8 für den Oberkiefer mit ebenfalls einem Spannbolzen 9. Die Zahnreihe und der korrigierte individuelle Löffel werden mittels ihrer Spannbolzen an einem nicht dargestellten Gesichtsbogen befestigt, der dann am Kopf des Patienten angeordnet wird. Durch entsprechendes Verschwenken und Arretieren werden die Zahnreihe und der korrigierte individuelle Löffel im Mund des Patienten und zueinander justiert und arretiert, dann in den Artikulator umgespannt und mittels der Justierelemente 5 zueinander verstellbar fixiert.

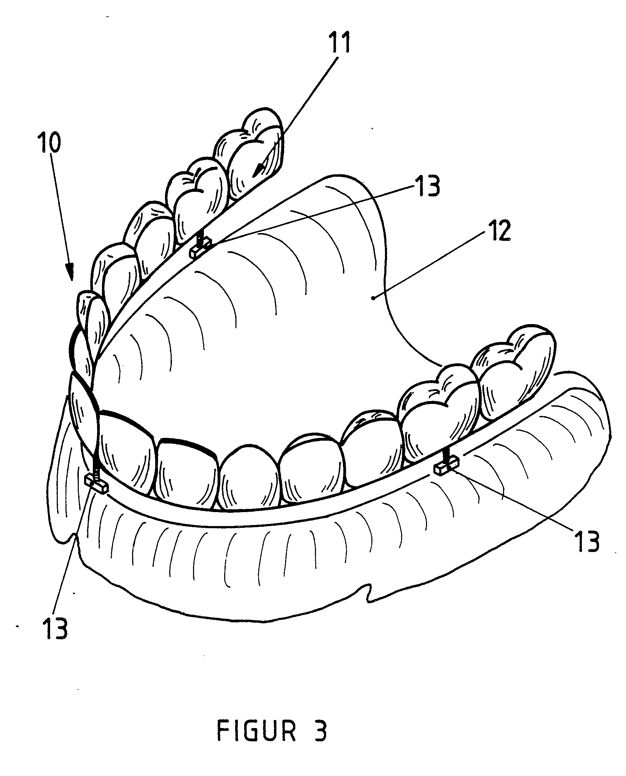

Die Figur 3 zeigt in perspektivischer Darstellung ein mit 10 bezeichnetes provisorisches Gebiß für den Oberkiefer, das die Zahnreihe 11 aus künstlichen Zähnen und den korrigierten individuellen Löffel 12 aufweist, die die Justierelemente 13 zueinander verstellbar fixieren.

In den Figuren 1 bis 3 sind zwischen dem korrigierten individuellen Löffel und der Zahnreihe jeweils drei Justierelemente angeordnet, mit denen der Abstand der Zahnreihe zu dem individuellen Löffel eingestellt wird.

Die Einstellung erfolgt im Mund des Patienten, der zumindest mehrere Tage das provisorische Gebiß trägt. Nach der optimalen Einstellung wird anhand des provisorischen Gebisses die Gießform für das Gebiß hergestellt und das Gebiß gegossen.

Es kann auch entsprechend Figur 2 eine Zahnreihe als Einheit in einen Gesichtsbogen eingespannt werden, der dann am Kopf des Patienten angeordnet wird.

Die Zahnreihe wird dann zu einer Bezugsebene zum Beispiel zur Frankfurter Ebene justiert, die justierte Zahnreihe(n) wird dann unter Einhaltung der Justierung in den Artikulator umgespannt und am Modell ein individueller Löffel für den Unterkiefer angefertigt und in der Mundhöhle des Patienten korrigiert.

Der korrigierte individuelle Löffel und die verstellbare Zahnreihe aus miteinander verbundenen künstlichen Zähnen bilden dann ebenfalls das provisorische Gebiß, mit dem dann das Gebiß für den Unterkiefer hergestellt wird.

In diesem Falle weist gemäß Figur 2 die Zahnreihe 6 einen Spannbolzen 7 auf. Mit diesem Spannbolzen wir die Zahnreihe in den Gesichtsbogen eingespannt und vom Gesichtsbogen in den Artikulator umgespannt.

Nach Herstellen des provisorischen Gebisses wird der Spannbolzen 7 abgeschnitten. Entsprechendes gilt für den Spannbolzen 9.

In den Figuren 1 bis 3 bestehen die Zahnreihen aus künstlichen Zähnen aus einem aus einem vorgefertigten und warm verformbaren bzw. mit UV-Licht aushärtbaren Streifen aus Kunststoffmaterial mit eingeprägten künstlichen Zähnen, der nach den Gegebenheiten in der Mundhöhle des Patienten nach dem Erwärmen entsprechend gebogen und auf die erforderliche Höhe zurückgeschliffen bzw. geschnitten wird. Es kann auch ein bekanntes Kunststoffmaterial verwendet werden, das durch Polymerisieren aushärtet.

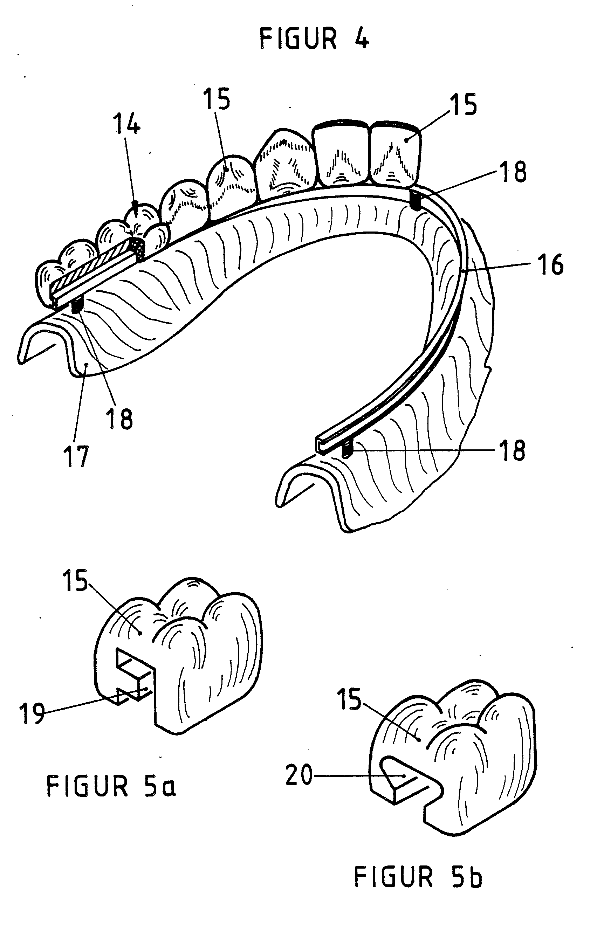

Die Figur 4 zeigt in perspektivischer Darstellung und in Abwandlung des Ausführungsbeispiels der Figur 1 ein weiteres Ausführungsbeispiel eines provisorischen Gebisses für den Unterkiefer in Explosionsdarstellung.

Die mit 14 bezeichnete Zahnreihe aus künstlichen Zähnen besteht aus einzelnen künstlichen Zähnen 15, die auf eine Profilschiene 16 aufgeschoben sind und mit ihr formschlüssig in Eingriff stehen. Falls die einzelnen Zähne mit hohem Reibschluß in die Schiene geschoben werden, ist es nicht erforderlich, noch zusätzliche Arretierungsmittel vorzusehen, um die Zähne in ihrer Stellung zu fixieren.

Zwischen der Profilschiene und dem korrigierten individuellen Löffel 17 sin die Justierelemente 18 angeordnet.

Die Figure 5 a zeigt perspektivisch einen Zahn 15, mit der zur Profilschiene 16 komplementär ausgebildeten Nut 19, die form- und kraftschlüssig mit der als Feder dienenden Profilschiene in Eingriff steht.

Die Figur 5 b zeigt in der Darstellung der Figure 5a ein weiteres Ausführungsbeispiel für die formschlüssige Verbindung zwischen den Zähnen der Zahnreihe und einer nicht dargestellten Profilschiene, wobei die kraft- und formschlüssige Verbindung zwischen ihnen nach dem Prinzip einer Schwalbenschwanzverbindung ausgebildet ist. Die mit 20 bezeichnete Nut ist komplementär zur nicht dargestellten Schiene ausgebildet.

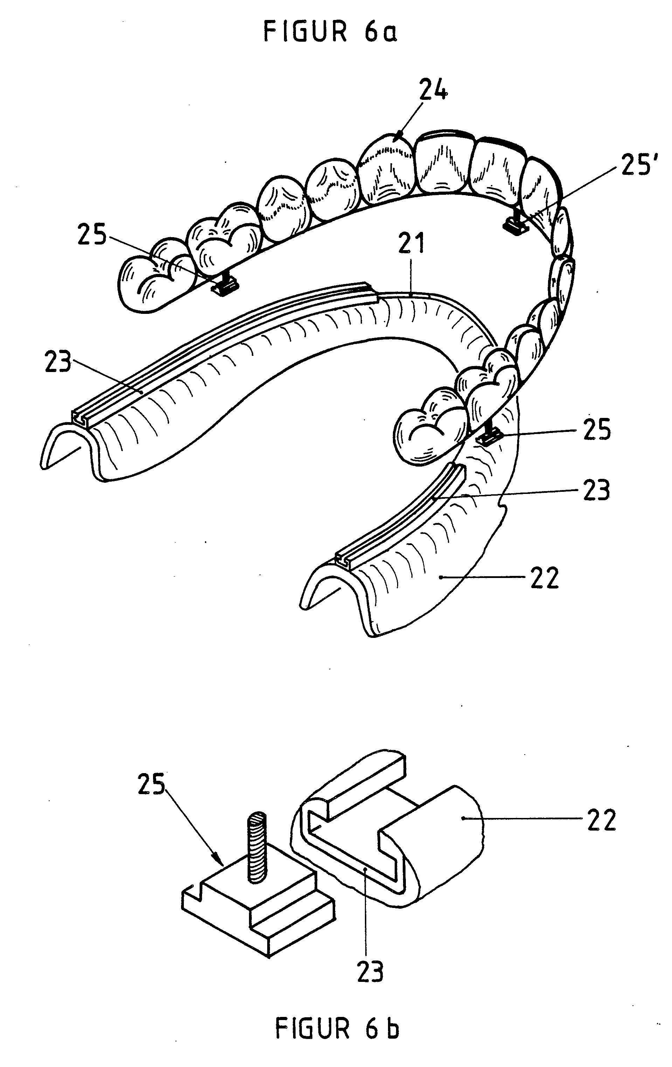

In Figur 6 a, die im wesentlichen mit der Figur 4 übereinstimmt, weist der Kieferkamm 21 des korrigierten individuellen Löffels 22 die beiden Profile 23 für die an der Unterseite der Zahnreihe 24 aus künstlichen Zähnen befestigten Justierelemente 25 auf. Gemäß Figur 6 b, die eines der Profile im Ausschnitt und in vergrößerter Darstellung zeigt, sind die Profile in Richtung zur Zahnreihe offen C-Profile, in denen die beiden Justierlemente im Bereich der Backenzähne verschiebbar und arretierbar geführt sind, während das dritte Justierelement 25' im Bereich der Vorderzähne erst dann fest mit dem aus einem aus einem Streifen aus Kunststoffmaterial bestehende Zahnreihe und dem korrigierten individuellen Löffel verbunden wird, wenn die beiden anderen Justierelemente nach dem Justieren fixiert bzw. arretiert worden sind.

Die Figur 6 b zeigt einen Ausschnitt des individuellen Löffels der Figur 6 a mit einem Nutenabschnitt 23 und einem verschiebbaren und arretierbaren Justierelement 25, wobei die Nut eingearbeitet ist.

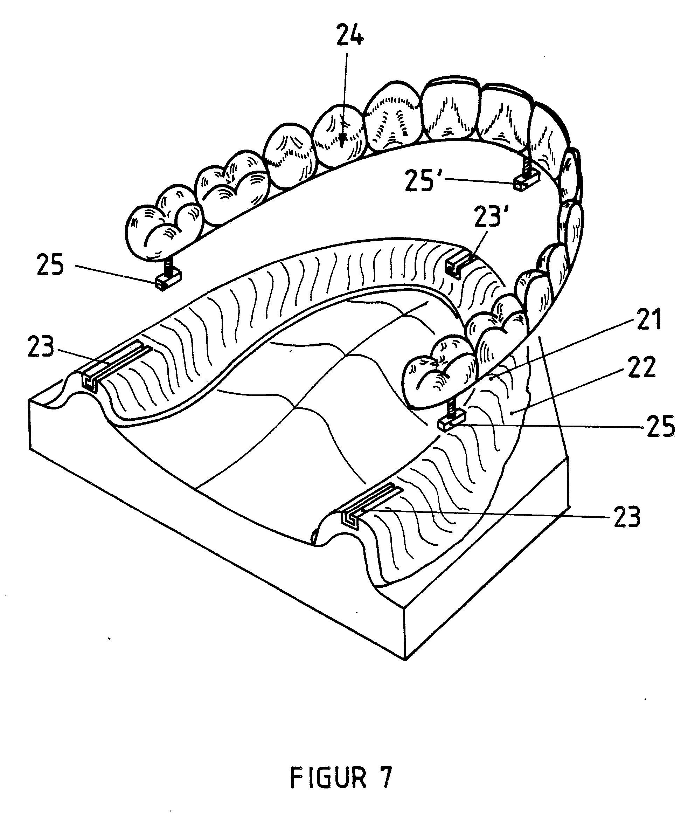

In Figur 7, die im wesentlichen mit der Figur 6 übereinstimmt, weist der Kieferkamm 21 der korrigierten individuellen Löffels 22 ebenfalls die beiden Profile 23 für die an der Unterseite der Zahnreihe 24 aus künstlichen Zähnen befestigten Justierelemente 25 auf. Wie in figur 6 b sind die Profile in Richtung zur Zahnreihe offen C-Profile, in denen die beiden Justierlemente im Bereich der Backenzähne verschiebbar und arretierbar geführt sind. Für das dritte Justierelement 25' im Bereich der Vorderzähne ist ein mit 23' bezeichnetes Profil vorgesehen, so daß die Zahnreihe als Einheit zu dem korrigierten individuellen Löffel in einer Ebene verschoben und arretiert werden kann. Das Einstellen des gegenseitigen Abstandes zwischen der Zahnreihe und dem korrigierten individuellen Löffel erfolgt anschließend.

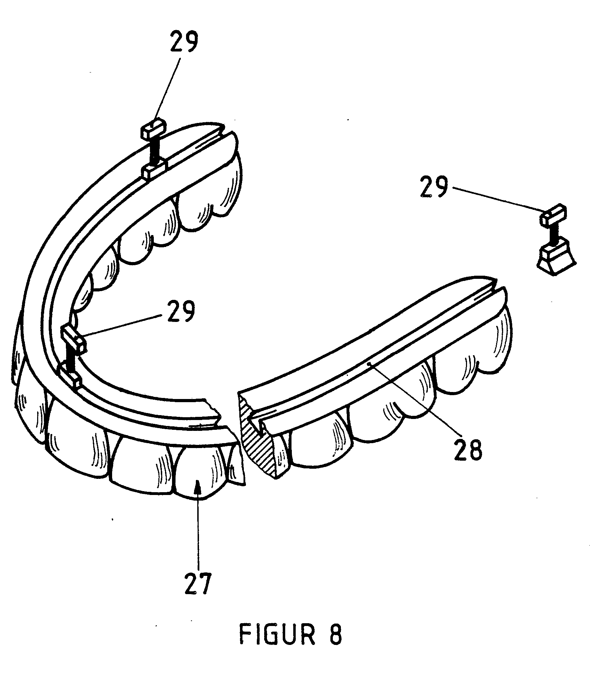

Die Figur 8 zeigt in Abwandlung der Figur 6 eine Zahnreihe 27 aus künstlichen Zähnen, die auf der Unterseite eine den Profilschienen der Figur 6a entsprechende Profilschiene 28 mit verschiebbar geführten Justierelementen 29 aufweist.

Falls die Justierelemente mit hohem Reibschluß in die Nuten eingeschoben werden, ist es nicht erforderlich, noch zusätzliche Arretierungsmittel vorzusehen, um die aus den künstlichen Zähnen als Einheit ausgebildete Zahnreihe in ihrer Stellung zu fixieren.

Es ist hierdurch möglich (Figur 6 und 8), bei der Anpassung des provisorischen Gebisses die Zahnreihe insgesamt mit den Zentrierelementen in Richtung zu oder von den Lippen weg im Sinne einer Justierung zu verschieben.

Durch die reibschlüssige und/oder form- und/oder kraftschlüssige Verbindung sind weitere Mittel zum Arretieren nicht erforderlich.

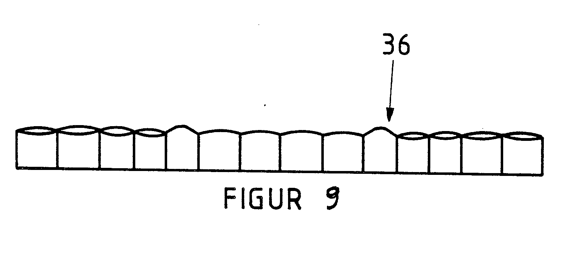

Die Figur 9 zeigt einen Streifen aus Kunststoffmaterial 36 mit eingeprägten Zähnen. Für die Praxis ist es ausreichend, mehrere Gruppen von vorgefertigten Streifen unterschiedlicher Länge zur Verfügung zu haben, die für die einzelnen Patienten auf die entsprechende individuelle Länge und Höhe geschliffen werden.

Im einfachsten Falle, zum Beispiel in den Ausführungbeispielen der Figuren 1 und 3, weisen zum gegenseitigen Arretieren und Verriegeln der individuellen Löffel und der Zahnreihen die individuellen Löffel und die Zahnreihen bzw. die Profile der Zahnreihen miteinander fluchtende Bohrungen mit gegenläufigem Innengewinde auf, während die Justierelemente nach dem Prinzip der Gewindebolzen ausgebildet sind.

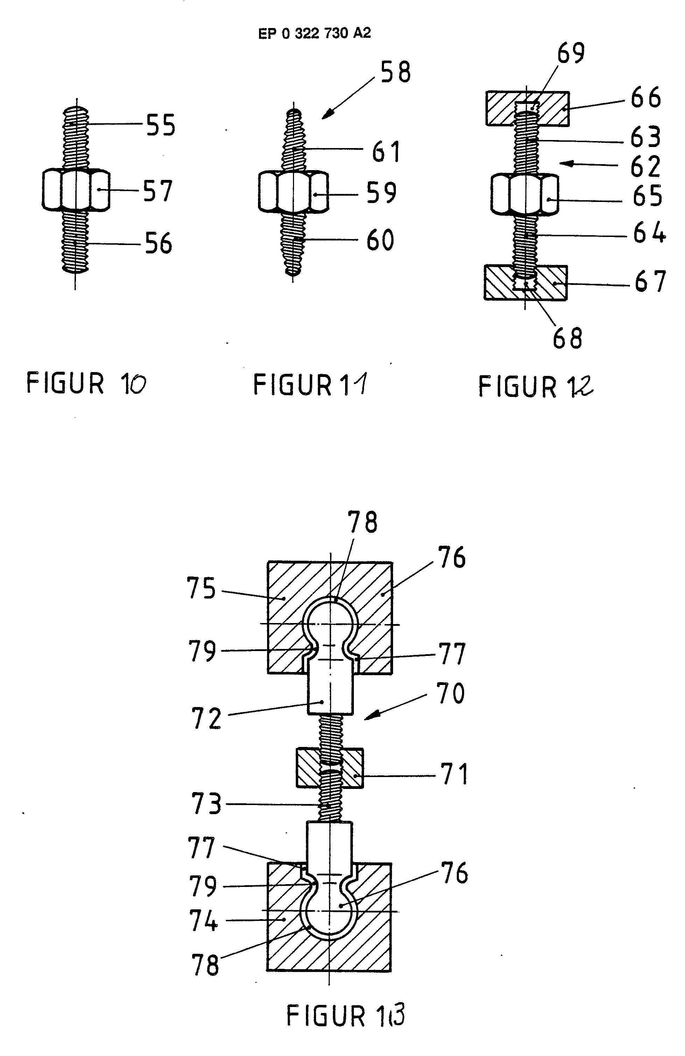

Diese Justierelemente sind in Figur 10 dargestellt. Sie weisen zwei Spindelabschnitte 55 und 56 mit gegenläufigem Gewinde auf, die durch den Schaft 57 von prismatischem Querschnitt miteinander verbunden sind.

Die Figur 11 zeigt ein weiteres Ausführungsbeispiel für die Justierelemente, die mit 58 bezeichnet sind. Das dargestellte Justierelement 58 weist ebenfalls einen Schaft 59 von prismatischem Querschnitt auf, an den sich beidseitig ein jeweils ein nach dem Prinzip der Madenschraube ausgebildeter Spindelabschnitt 60 bzw. 61 anschließt. In diesen Fällen ist es nicht erforderlich, daß die Zahnreihe bzw. ihre Profilschiene und der korrigierte individuelle Löffel Bohrungen aufweisen, da diese Justierelemente sich ohne weiteres an jeder beliebigen Stelle der Zahnreihe bzw. der Profilschiene und des korrigierten individuellen Löffels bei geeigneter Materialauswahl eindrehen lassen.

In beiden Fällen weisen die Spindelabschnitte gegenläufige Gewinde auf, wobei ein Eindrehen der Justierelemente in die Zahnreihe bzw. in das Profil und die korrigierten individuellen Löffel mit einem an dem prismatischen Schaft angreifenden Schraubenschlüssel erfolgt.

Dies gilt auch für die nachfolgend beschriebenen Ausführungsbeispiele der Justierelemente der Figuren 12 und 13.

Das Justierelement 62 der Figur 12 besteht aus den beiden gegenläufigen Gewindespindeln 63 und 64, sowie einem sie verbindenden Schaft 65 von prismatischem Querschnitt. Die freien Endabschnitte der Gewindesspindeln sind drehbar in den Widerlagern 66 und 67 angeordnet, die Sacklochbohrungen 68 bzw. 69 mit einem Innengewinde aufweisen. Die Widerlager werden in die Zahnreihe bzw. ihre Schiene und in den korrigierten individuellen Löffel eingeklebt bzw. eingegossen. Durch eine ausreichend große Selbsthemmung der Gewindespindeln ist sichergestellt, daß eine vorgenommene Justierung erhalten bleibt.

Die Figur 13 zeigt ein weiteres Ausführungsbeispiel für mit 70 bezeichnete Justierelemente. Sie bestehen aus den beiden Gewindespindeln 71 und 72, sowie einer Hülse 73 mit zwei gegenläufigen Innengewindeabschnitten, die jeweils mit einer der Spindeln in Eingriff stehen. Die Hülse hat einen Umriß von prismatischem Querschnitt. Die freien Endabschnitte der Gewindespindeln sind drehbar in den Widerlagern 74 bzw. 75 angeordnet, mit denen sie nach dem Prinzip der Schnappverbindung in Eingriff stehen. Die Widerlager werden in die Zahnreihe bzw. ihre Schiene und in den korrigierten individuellen Löffel eingeklebt bzw. eingegossen. Die Widerlager haben zur Aufnahme der als Kugelköpfe 76 ausgebildeten Endabschnitte der Spindeln einen in ihre Außenfläche mündende Bohrungsabschnitt 77, der nach innen in eine Kugelpfanne 78 übergeht. Die Bohrungsabschnitte zentrieren die glatten Schäfte der Spindelabschnitte, so daß eine Justierung nur in Achsenrichtung möglich ist. Im Bereich der Kugelköpfe weisen die Endabschnitte ein Einschnürung auf, in die jeweils ein komplementäre Wulst 79 der Widerlager beim Zusammenfügen einschnappt.

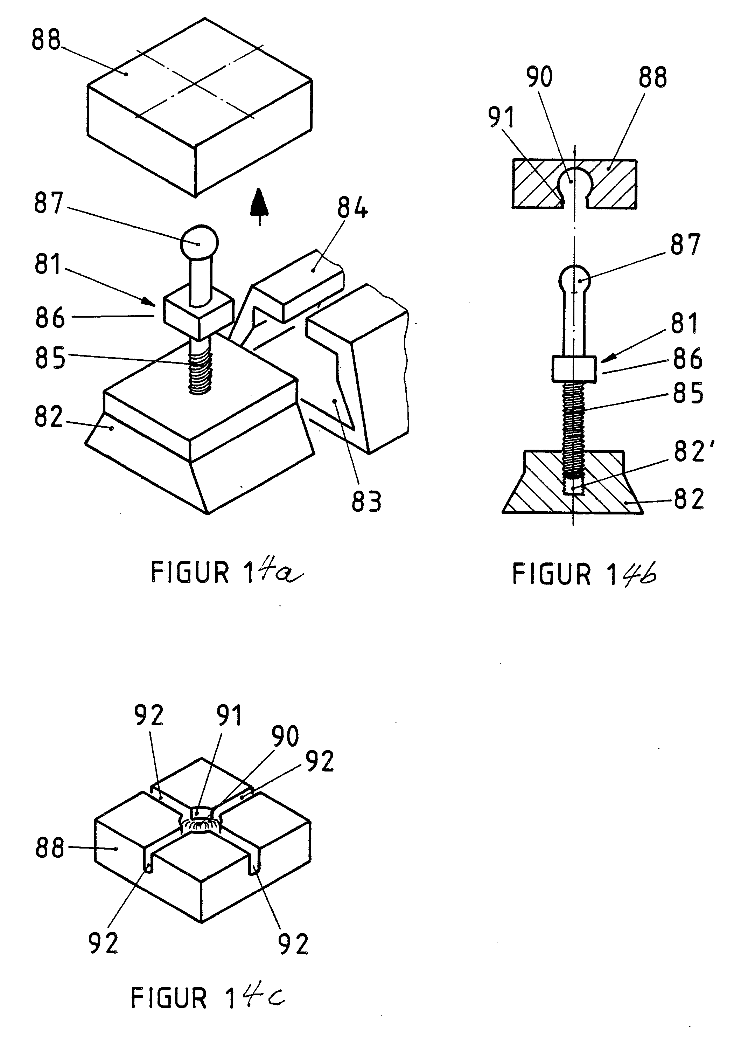

Das Justierelement 80 der Figuren 14 a und 14 b unterscheidet sich von demjenigen der Figur 16 dadurch, daß die Widerlager 79 als Pfannen für die Kugelköpfe ausgebildet sind und ein Verschwenken der Spindeln und der Hülse zu den Widerlagern nach dem Prinzip der Kugelgelenke erlauben. Durch eine reibschlüssige Lagerung der Kugelköpfe in den Widerlagern ist gewährleistet, daßim Mund des Patienten eine vorgenommene Justierung erhalten bleibt.

Die Figuren 15 a bis 15 c zeigen ein weiteres Ausführungsbeispiel für die Justierelemente, die dann zum Einsatz kommen, wenn die Zahnreihen und/oder die korrigierten individuellen Löffel eine Profilschiene für die Justierelemente aufweisen wie dies unter anderem aus den Figuren 6 a und 6 b ersichtlich ist, wobei die Justierelemente in der Profilschiene verschiebbar und arretierbar sind.

Gemäß diesen Figuren weist das mit 81 bezeichnete Justierelement einen Gleitstein 82 aus, der komplementär mit der Nut 83 der im Ausschnitt dargestellten Profilschiene 84 in Eingriff steht. Er weist eine Sacklochbohrung 82' mit Innengewinde auf, die mit dem Gewindeabschnitt 85 der Spindel 86 in Eingriff steht. Die Spindel weist einen Schaftabschnitt von quadratischem Querschnitt auf, so er mit einem entsprechenden Schraubenschlüssel verdreht werden kann. Die Spindel weist oberhalb des Schaftabschnittes einen Kugelkopf 87 auf, mit dem sie nach Art einer Schnappverbindung mit dem Widerlager 88 in Eingriff steht.

Die Figur 15 b zeigt einen Querschnitt durch das Widerlager, das zur Aufnahme des Kugelkopfes die Pfanne 90 und den in ihre Oberfläche mündenden Bohrungsabschnitt 91 aufweist.

Die Figur 15 c zeigt eine perspektivische Darstellung des Widerlagers 88, wobei vier Nuten 92, deren Tiefe etwa gleich der halben Dicke des Widerlagers entspricht, die Schnappverbindung der Spindel mit dem Widerlager sicherstellen.

Die Figur 15 b zeigt einen Schnitt in Pfeilrichtung in Figur 18 a. Der Gleitstein weist die mit einem Innengewinde versehene Sacklochbohrung 93 auf.

Durch die Erfindung wird erreicht, daß die bisherigen Komplikationen beim Herstellen von Gebissen vermieden werden und daß der Patient bix zum Erhalt des endgültigen Gebisses ein vorläufiges Gebiss trägt, deren Eingenschaften identisch sind.

Es liegt im Rahmen der Erfindung, das vorläufige Gebisse zu verblenden, so daß der Abstand der Zahnreihe aus künstlichen Zähnen zu dem korrigierten individuellen Löffel verdeckt ist. Insoweit ist im Rahmen der Erfindung unter einem Gebiß auch provisorisches Gebiß zu verstehen, das eine derartige Verblendung aufweist, so daß es in vielen Fällen im Sinne der Erfindung nicht mehr eforderlich ist, mit einem justierten und arretierten provisorischen Gebiß entsprechend den obigen Ausführungen das Gebiß zu gießen.

**Ansprüche**

1.) Verfahren zum Herstellen eines Gebisses für den Oberkiefer und/oder eines Gebisses für den Unterkiefer, indem mit einem ersten Abdruck des Oberkiefers und mit einem ersten Abdruck des Unterkiefers jeweils ein Modell angefertigt wird, die Modelle in einem Artikulator zueinander justiert werden, an den Modellen ein individueller Löffel für den Oberkiefer und/oder ein individueller Löffel für den Unterkiefer hergestellt und in der Mundhöhle des Patienten korrigiert wird (werden),
dadurch gekennzeichnet, daß
aus dem (den) korrigierten individuellen Löffel(n) und (jeweils) einer mit ihm (ihnen) verbindbaren Zahnreihe aus künstlichen Zähnen ein provisorisches Gebiß (provisorische Gebisse) hergestellt wird (werden), die Zahnreihe(n) zu dem (den) korrigierten individuellen Löffel(n) als Einheit verstellbar ausgebildet wird (werden), das Justieren der Zahnreihe(n) zu dem (den) korrigierten individuellen Löffel(n) während des Tragens des (der) provisorischen Gebisses (Gebisse) erfolgt, anhand des (der) justierten provisorischen Gebisses (Gebisse) die Gießform(en) für das Gebiß (die Gebisse) hergestellt und das Gebiß (die Gebisse) gegossen wird (werden).

2) Verfahren zum Herstellen eines provisorischen Gebisses für den Oberkiefer und/oder eines provisorischen Gebisses für den Unterkiefer, indem mit einem ersten Abdruck des Oberkiefers und mit einem ersten Abdruck des Unterkiefers jeweils ein Modell angefertigt wird, die Modelle in einem Artikulator justiert werden, an den Modellen ein individueller Löffel für den Oberkiefer und/oder ein individueller Löffel für den Unterkiefer hergestellt und in der Mundhöhle des Patienten korrigiert wird (werden),
dadurch gekennzeichnet, daß
aus dem (den) korrigierten individuellen Löffel(n) und (jeweils) einer mit ihm (ihnen) verbindbaren Zahnreihe aus künstlichen Zähnen ein provisorisches Gebiß (provisorische Gebisse) hergestellt und die Zahnreihe(n) zu dem (den) korrigierten individuellen Löffel(n) als Einheit verstellbar ausgebildet wird (werden).

3.) Verfahren zum Herstellen eines Gebisses für den Oberkiefer und/oder eines Gebisses für den Unterkiefer, indem mit einem ersten Abdruck des Oberkiefers und mit einem ersten Abdruck des Unterkiefers jeweils ein Modell angefertigt wird und die Modelle in einem Artikulator justiert werden, an den Modellen ein individueller Löffel für den Oberkiefer oder ein individueller Löffel für den Unterkiefer hergestellt und in der Mundhöhle des Patienten korrigiert wird (werden),
dadurch gekennzeichnet, daß
ein Gesichtsbogen mit einer dem Oberkiefer und/oder dem Unterkiefer zugeordneten Zahnreihe aus künstlichen Zähnen am Kopf des Patienten angeordnet wird, die Zahnreihe(n) zu einer Bezugsebene justiert wird (werden), die justierte Zahnreihe(n) unter Einhaltung der Justierung in den Artikulator umgespannt wird (werden), am Modell ein individueller Löffel für den Oberkiefer und/oder ein individueller Löffel für den Unterkiefer angefertigt und in der Mundhöhle des Patienten korrigiert wird (werden), mit dem (den) korrigierten individuellen Löffel(n) die Zahnreihe(n) verstellbar verbunden wird (werden) und ein provisorisches Gebiß (provisorische Gebisse) bilden, das Justieren der Zahnreihe(n) während des Tragens des (der) provisorischen gebisses (Gebisse) erfolgt, anhand des (der) justierten provisorischen Gebisses (Gebisse) die Gießform(en) für das Gebiß (die Gebisse) hergestellt und das Gebiß gegossen wird (werden).

4.) Verfahren nach Anspruch 3,
dadurch gekennzeichnet, daß
zum Herstellen des (der) ersten Abdruckes (Abdrücke) der (die) Abdrucklöffel am Gesichtsbogen befestigt und zur Bezugsebene ausgerichtet wird (werden).

5.) Verfahren zum Herstellen eines provisorischen Gebisses für den Oberkiefer und/oder eines Gebisses für den Unterkiefer, indem mit einem ersten Abdruck des Oberkiefers und mit einem ersten Abdruck des Unterkiefers jeweils ein Modell angefertigt wird und die Modelle in einem Artikulator zueinander justiert werden, an den Modellen ein individueller Löffel für den Oberkiefer und/oder ein individueller Löffel für den Unterkiefer hergestellt und in der Mundhöhle des Patienten korrigiert wird (werden),
dadurch gekennzeichnet,daß
ein Gesichtsbogen mit einer dem Oberkiefer und/oder dem Unterkiefer zugeordneten Zahnreihe aus miteinander verbundenen künstlichen Zähnen am Kopf des Patienten angeordnet wird, die Zahnreihe(n) zu einer Bezugsebene justiert wird (werden), die justierte Zahnreihe(n) unter Einhaltung der Justierung in den Artikulator umgespannt wird (werden), am Modell ein individueller Löffel für den Oberkiefer und/oder ein individueller Löffel für den Unterkiefer angefertigt und in der Mundhöhle des Patienten korrigiert wird (werden), aus dem (den) korrigierten individuellen Löffel(n) und jeweils einer mit ihm (ihnen) verbindbaren Zahnreihe aus miteinander verbundenen künstlichen Zähnen ein provisorisches Gebiß hergestellt und die Zahnreihe zu dem korrigierten individuellen Löffel als Einheit verstellbar ausgebildet wird.

6.) Verfahren nach Anspruch 5,
dadurch gekennzeichnet, daß
der (die) Abdrucklöffel am Gesichtsbogen befestigt und zu einer Bezugsebene ausgerichtet wird (werden).

7.) Verfahren zum Herstellen eines mit Implantaten verriegelbaren Gebisses für den Oberkiefer und/oder eines Gebisses oder für den Unterkiefer, indem mit einem ersten Abdruck des Oberkiefers und mit einem ersten Abdruck des Unterkiefers jeweils ein Modell angefertigt und die Modelle in einem Artikulator zueinander justiert werden, dadurch gekennzeichnet, daß
ein Gesichtsbogen mit einer dem Oberkiefer und/oder dem Unterkiefer zugeordneten Zahnreihe aus künstlichen Zähnen am Kopf des Patienten angeordnet wird, die Zahnreiheihe(n) zu einer Bezugsebene justiert wird (werden), die justierte(n) Zahnreihe(n) unter Einhaltung der Justierung in den Artikulator umgespannt wird (werden) und am Kieferkamm des Modells zum Anpassen überarbeitet und im Mund des Patienten eingesetzt und verriegelt wird. Patienten angepasst wird (werden).

8.) Verfahren nach Anspruch 7,
dadurch gekennzeichnet, daß
der (die) Abdrucklöffel am Gesichtsbogen befestigt und zur Bezugsebene ausgerichtet wird (werden).

9.) Provisorisches Gebiß für den Oberkiefer und/oder provisorisches Gebiß für den Unterkiefer, insbesondere für die Herstellung des Gebisses nach einem der Ansprüche 1 bis 6,
gekennzeichnet durch
einen korrigierten individuellen Löffel (12) für den Oberkiefer und/oder für den Unterkiefer und eine mit ihm (ihnen) verbindbare Zahnreihe (11) aus künstlichen Zähnen.

10.) Provisorisches Gebiß für den Oberkiefer und/oder für provisorisches Gebiß für den Unterkiefer nach Anspruch 9,

dadurch gekennzeichnet daß
die Zahnreihe(n) (4) aus den künstlichen Zähnen als Einheit(en) zu dem (den) korrigierten indiviuellen Löffel(n) (3) verstellbar ist (sind).

11.) Provisorisches Gebiß für den Oberkiefer und/oder provisorisches Gebiß für den Unterkiefer nach Anspruch 9 oder 10,
dadurch gekennzeichnet, daß
zwischen dem Kieferkamm des (der) korrigierten individuellen Löffels (Löffel) Justierelemente (5) angeordnet sind, und die Justierelemente mit dem korrigierten individuellen Löffel (12) und der Zahnreihe (11) kraftschlüssig und/oder formschlüssig in Eingriff stehen.

12.) Provisorisches Gebiß für den Oberkiefer und/oder provisorisches Gebiß für den Unterkiefer, nach Anspruch 9, 10 oder 11,
dadurch gekennzeichnet, daß
die Zahnreihe aus einem vorgefertigten Streifen (36) aus Kunststoffmaterial mit eingeprägten Zähnen besteht.

13.) Provisorisches Gebiß für den Oberkiefer und/oder provisorisches Gebiß für den Unterkiefer, nach Anspruch 12,
dadurch gekennzeichnet, daß
der Streifen (37) der Zahnreihe aus drei aneinander angelenkten Abschnitten (38, 39 40) besteht.

14.) Provisorisches Gebiß für den Oberkiefer und/oder provisorisches Gebiß für den Unterkiefer, nach einem der oder mehreren der Ansprüche 9 bis 13,
dadurch gekennzeichnet daß
die künstlichen Zähnen (15) auf (in) eine(r) Profilschiene (16) aufgeschoben sind und die Profilschiene mit den Zentrierelementen (18) in Eingriff steht.

15.) Provisorisches Gebiß für den Oberkiefer und/oder provisorisches Gebiß für den Unterkiefer, nach einem oder mehreren der Ansprüche 9 bis 14,
dadurch gekennzeichnet, daß
der (die) korrigierte(n) individuelle(n) Löffel mindestens ein Profil (16) für die Justierelemente (18) aufweist (aufweisen).

16.) Provisorisches Gebiß für den Oberkiefer und/oder provisorisches Gebiß für den Unterkiefer, nach einem oder mehreren der Ansprüche 9 bis 15,
dadurch gekennzeichnet, daß
die Zahnreihe(n) (27) mindestens eine Profilschiene für die Justierelemente (25) aufweist (aufweisen).

17.) Provisorisches Gebiß für den Oberkiefer und/oder provisorisches Gebiß für den Unterkiefer, nach einem oder mehreren der Ansprüche 9 bis 16,
dadurch gekennzeichnet, daß
die Justierelemente in der (den) Profilschiene(n) verschiebbar und arretierbar angeordnet sind.

18.) Provisorisches Gebiß für den Oberkiefer und/oder provisorisches Gebiß für den Unterkiefer, nach einem oder mehreren der Ansprüche 9 bis 17,
dadurch gekennzeichnet, daß
das (die) Profil(e) und der (die) korrigierte(n) individuelle(n) Löffel nach dem Prinzip der Schwalbenschwanzverbindung miteinander in Eingriff stehen.

19.) Provisorisches Gebiß für den Oberkiefer und/oder provisorisches Gebiß für den Unterkiefer, nach einem oder mehereren der Ansprüche 9 bis 18, dadurch gekennzeichnet, daß
der (die) indiciduelle(n) Löffel und die Zahnreihe(n) bzw. das (die) Profil(e) der Zahnreihe(n) miteinander fluchtende Bohrungen mit gegenläufigem Innengewinde aufweisen und die Justierelemente (29) Gewindebolzen sind, die Gewindebolzen jeweils zwei Spindel abschnitte (55,56) mit gegenläufigem Gewinde aufweisen und ein Schaft (57) von prismatischem Querschnitt die beiden Spindelabschnitte miteinander verbindet.

20.) Provisorisches Gebiß für den Oberkiefer und/oder provisorisches Gebiß für den Unterkiefer, nach einem oder mehreren der Ansprüche 9 bis 17,
dadurch gekennzeichnet, daß
die Justierelemente (58) jeweils einen Schaft (59) von prismatischem Querschnitt aufweisen, an den Schaft sich beidseitig jeweils ein nach dem Prinzip der Madenschraube ausgebildeter Spindelabschnitt (60 bzw. 61) anschließt, die beiden Spindelabschnitte gegenläufige Gewinde aufweisen, und die Justierelemente mit den Spindelabschnitten in den (die) individuellen Löffel und due Zahnreihe(n) bzw. das (die) Profil(e) einschraubbar sind.

21.) Provisorisches Gebiß für den Oberkiefer und/oder provisorisches Gebiß für den Unterkiefer, nach einem oder mehreren der Ansprüche 9 bis 20,
dadurch gekennzeichnet, daß
die Justierelemente (70) jeweils zwei Gewindespindeln (71, 72) und eine Hülse (73) mit einem Innengewinde aufweisen, die einen Endabschnitte der Spindelabschnitte mit der Hülse in Eingriff stehen und die anderen Endabschnitte der Spindeln drehbar in Widerlagern (74) bzw. (75) angeordnet sind.

22.) Provisorisches Gebiß für den Oberkiefer und/oder provisorisches Gebiß für den Unterkiefer, nach Anspruch 21,
dadurch gekennzeichnet, daß
die Wiederlager in das Material der Zahnreihe(n) und/oder des (der) individuelle Löffels (Löffel) einsetzbar bzw. eingießbar sind.

23.) Provisorisches Gebiß für den Oberkiefer und/oder provisorisches Gebiß für den Unterkiefer, nach Anspruch 21,
dadurch gekennzeichnet, daß
die Widerlager (82) in der (den) Profilschiene(n) (84) verschiebbar und arretierbar angeordnet sind.

24.) Provisorisches Gebiß für den Oberkiefer und/oder provisorisches Gebiß für den Unterkiefer, nach Anspruch 19 oder 20,
dadurch gekennzeichnet, daß
die anderen Endabschnitte der Gewindespindeln als Kugelköpfe (76) und die Widerlager als Kugelpfannen (78) ausgebildet sind, in denen die Kugelköpfe dreh- und schwenkbar mit hoher Reibung gelagert sind.

25.) Provisorisches Gebiß für den Oberkiefer und/oder für den Unterkiefer, nach einem der Ansprüche 9 bis 24,
dadurch gekennzeichnet, daß
die in den Gesichtbogen einzuspannenden und in den Artikulator umzuspannenden Zahnreihen und individuellen Löffel jeweils einen Spannbolzen (7 bzw. 9) aufweisen.

FIGUR 1

## FIGUR 2

FIGUR 3

# FIGUR 4

15

14

15

18

16

18

17

18

# FIGUR 5a

15

19

# FIGUR 5b

15

20

# FIGUR 6a

# FIGUR 6b

FIGUR 7

FIGUR 8

36

FIGUR 9

FIGUR 10

FIGUR 11

FIGUR 12

FIGUR 13

FIGUR 14a

FIGUR 14b

FIGUR 14c